# EUROPEAN PATENT APPLICATION

(11) **EP 4 742 034 A1**
(43) Date of publication of application: **13.05.2026**
(21) Application number: 24835718.8
(22) Date of filing: 09.01.2024
(51) Int. Cl.: G06F 9/50, G06F 11/30, G06F 11/34

(54) **COMPUTER SYSTEM AND METHOD OF DETERMINING PARAMETER**

(30) Priority: 05.07.2023 JP 2023110923
(71) Applicant: Hitachi, Ltd., Tokyo 100-8280 (JP)
(72) Inventor: KONOURA Hiroaki, Tokyo 100-8280 (JP); OHKUBO Keiko, Tokyo 100-8280 (JP); MIYATA Tatsuhiko, Tokyo 100-8280 (JP); YONEYAMA Motoki, Tokyo 100-8280 (JP); FUJIKI Nobuhiro, Tokyo 100-8280 (JP)
(74) Representative: Mewburn Ellis LLP
(86) International application number: PCT/JP2024/000102
(87) International publication number: WO 2025/009194

(57) **Abstract**

A computer system connects with an execution environment system that provides instances and an autoscaling system that controls the scaling of the instances. In the execution environment system, an application providing the same service is executed a plurality of times by using the instances. The computer system acquires an execution log of processing of a target application, generates a load pattern using the execution log, sets a threshold of a determination metric for controlling execution of scaling based on the load pattern, executes simulation processing of simulating processing and scaling of a target application a plurality of times, and determines the threshold of the determination metric based on a result of the simulation processing.

## Description

### Incorporation by Reference

The present application claims priority to Japanese Patent Application No. 2023-110923 filed on July 5, 2023, the contents of which are incorporated herein by reference.

### Technical Field

The present invention relates to an autoscaling technique of resources for executing event-driven distributed applications.

### Background Art

When various application services are deployed in a cloud environment or the like, orchestration tools and services such as Kubernetes (k8s) and Amazon ECS (Elastic Container Service) for reducing the operation load of containers arranged on a plurality of servers are being utilized.

As one of main functions of the orchestration tool, there is an autoscaling function of resources. In the autoscaling function, a determination metric indicating a load status of a resource used by an application is monitored, a resource is dynamically added in a case where the determination metric exceeds a scaling reference value (threshold), a processing throughput of the application is increased, and the resource is stopped in a case where the determination metric falls below the threshold. The processing throughput of the application can be increased by adding the resource, and the resource usage amount can be suppressed by stopping the resource. For example, use of the autoscaling function is recommended in use of a service such as a cloud managed container service in which a metered amount is high when a resource is constantly activated.

When business logic is dropped into an application, there is a case where an event calling different processing occurs for one request, and parallel distributed processing is executed by event drive. In such a case, processing corresponding to a certain event is an application including complicated parallel distributed processing such as waiting for processing corresponding to another event or generating another event. Hereinafter, an application having the above-described properties will be referred to as an event-driven distributed application.

Techniques described in PTLs 1 and 2 are known as techniques for capturing and evaluating fluctuations in determination metrics used for autoscaling and autoscaling resources.

An object of PTL 1 is to provide a technique that enables operation of a system with high charging efficiency. An autoscaling method is disclosed in which, in a system that executes a requested process in a plurality of computer nodes in a distributed manner, a computer node that manages a task to be executed in the system executes a simulation for allocating the task of the processing request to the computer node with reference to management information for managing the task executed by the computer node included in the system, the management information being stored in a storage unit, when the computer node receives a processing request with a specified due date, and executes a process of adding the computer node to the system in a case where it is determined by the simulation of the allocation that there is no computer node capable of terminating the task of the processing request within the due date and it is not possible to prepare a computer node capable of terminating the task of the processing request within the due date even if another computer node migrates the task capable of terminating the processing within the due date.

PTL 2 discloses a method in which a proactive autoscaling system uses a heuristic approach and machine learning to actively and dynamically and automatically scale computing resources allocated to an application prior to a scaling event that causes a change in load level.

### Citation List

### Patent Literature

PTL 1: JP 2013-210683 A
PTL 2: US 11,226,844

### Summary of Invention

### Technical Problem

In order to control the scaling to satisfy the SLA and the operation policy, it is necessary to appropriately set the threshold of the determination metric. For this purpose, a method of executing simulation of an event-driven distributed application and an autoscaling service using the techniques described in PTLs 1 and 2 and calculating a threshold of a determination metric can be considered.

Even in an event-driven distributed application that provides the same service, implementation of the event-driven distributed application varies depending on a region and a user. Therefore, there are various flows of events in the event-driven distributed application, and a tendency of event branching is different. Therefore, it is necessary to perform simulation after specifying the flow of the event and specifying the occurrence frequency of the flow of the event. In addition, the operation of the application service on the cloud system also complicates management of a base for providing the application service. Therefore, it is difficult to grasp the behavior of each event-driven distributed application. Therefore, it is difficult to directly apply the conventional technique.

An object of the present invention is to set a threshold of a determination metric for autoscaling of each event-driven distributed application in a system in which a plurality of event-driven distributed applications operates.

### Solution to Problem

A representative example of the invention disclosed in the application is as follows. That is, a computer system including a processor, a memory connected to the processor, and a network interface connected to the processor, in which an execution environment system that provides an instance and an autoscaling system that controls scaling of the instance are connected, in the execution environment system, a plurality of applications that provide a same service are executed by using the instance, the application includes a plurality of event-driven event processing, and the processor is configured to execute acquiring an execution log of processing of a target application, generating, by using the execution log, a load pattern including one or more sets of a processing flow of the event processing in the target application and a temporal transition of a number of requests processed by the processing flow, setting a threshold of a determination metric for controlling execution of the scaling based on the load pattern, and executing simulation processing of simulating processing of the target application and the scaling a plurality of times, and determining a threshold of the determination metric based on a result of the simulation processing.

### Advantageous Effects of Invention

According to an embodiment of the present invention, in a system in which a plurality of event-driven distributed applications are operated, it is possible to set a threshold of a determination metric for autoscaling of each event-driven distributed application. Objects, configurations, and effects besides the above description will be apparent through the explanation on the following embodiments.

### Brief Description of Drawings

[FIG. 1] FIG. 1 is a diagram illustrating an exemplary configuration of an IT system of a first embodiment.
[FIG. 2] FIG. 2 is a diagram illustrating an example of a configuration of a computer that implements the server of the first embodiment.
[FIG. 3] FIG. 3 is a diagram illustrating an example of cooperation between servers in the IT system of the first embodiment.
[FIG. 4] FIG. 4 is a diagram illustrating an example of a functional configuration of an evaluation server of the first embodiment.
[FIG. 5A] FIG. 5A is a diagram illustrating an example of a data structure of information stored in a simulation DB of the first embodiment.
[FIG. 5B] FIG. 5B is a diagram illustrating an example of a data structure of information stored in the simulation DB of the first embodiment.
[FIG. 5C] FIG. 5C is a diagram illustrating an example of a data structure of information stored in the simulation DB of the first embodiment.
[FIG. 5D] FIG. 5D is a diagram illustrating an example of a data structure of information stored in the simulation DB of the first embodiment.
[FIG. 5E] FIG. 5E is a diagram illustrating an example of a data structure of information stored in the simulation DB of the first embodiment.
[FIG. 6] FIG. 6 is a sequence diagram illustrating a flow of deployment/control of a collection unit in the IT system of the first embodiment.
[FIG. 7] FIG. 7 is a flowchart for explaining an outline of processing executed by the evaluation server of the first embodiment.
[FIG. 8] FIG. 8 is a flowchart for explaining an example of load pattern generation processing executed by the evaluation server of the first embodiment.
[FIG. 9] FIG. 9 is a flowchart for explaining an example of threshold determination processing executed by the evaluation server of the first embodiment.
[FIG. 10] FIG. 10 is a flowchart for explaining an example of minimum/maximum server number determination processing executed by the evaluation server of the first embodiment.
[FIG. 11] FIG. 11 is a diagram illustrating an example of a GUI presented by the evaluation server of the first embodiment.

### Description of Embodiments

Hereinafter, embodiments of the present invention will be described using the drawings. However, the present invention is not interpreted in a limited way to the following embodiments. A person skilled in the art can easily understand that the specific configurations may be changed within a scope not departing from the ideas and the spirit of the present invention.

The configurations or functions which are identical or similar below in the invention will be attached with the same symbols, and the redundant description will be omitted.

The notations of "first", "second", and "third" in this specification are attached in order to identify the components, but not necessarily used to indicate the number or the order.

### First embodiment

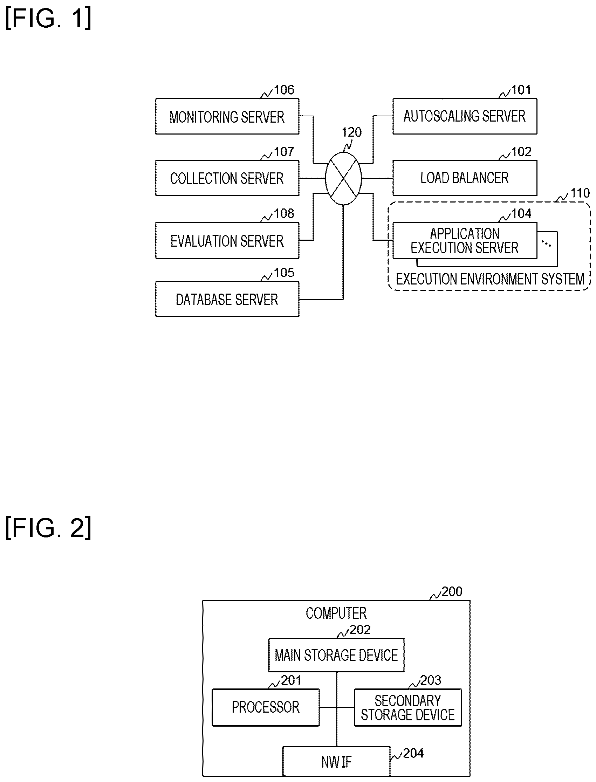

FIG. 1 is a diagram illustrating an exemplary configuration of an IT system of a first embodiment. FIG. 2 is a diagram illustrating an example of a configuration of a computer that implements the server of the first embodiment.

The IT system includes an autoscaling server 101, a load balancer 102, a plurality of application execution servers 104, a database server 105, a monitoring server 106, a collection server 107, and an evaluation server 108. The servers are connected to each other via a network 120. The network 120 includes a Local Area Network (LAN), a Wide Area Network (WAN), and the Internet. The network connection method may be either wired or wireless. Furthermore, the network 120 may be a private network or a public network.

The server of the IT system is realized by using, for example, a computer 200 as illustrated in FIG. 2. The computer 200 includes a processor 201, a main storage device 202, a secondary storage device 203, and a network interface 204. The hardware elements are connected to each other via a bus. Note that the computer 200 may include an input device that receives an input from the user and an output device that outputs data visually recognizable by the user. The input device is, for example, a keyboard, a mouse, a touch panel, or the like, and the output device is, for example, a display, a printer, or the like.

The processor 201 executes a program stored in the main storage device 202. The processor 201 performs a process according to the program to operate as a functional unit (module) which realizes a specific function. In the following description, in a case where a process is described with the functional unit as a subject, it indicates that the processor 201 performs the program which realizes the functional unit.

A field programmable gate array (FPGA), an application specific integrated circuit (ASIC), or the like may be used instead of the processor 201. In addition, the processor 201 may be used in combination with an FPGA or an ASIC.

The main storage device 202 is a high-speed storage device such as a dynamic random access memory (DRAM), and stores a program executed by the processor 201 and data used when the program is executed. The main storage device 202 is also used as a work area. Note that the computer 200 may include a read only memory (ROM) that stores a BIOS and the like.

The secondary storage device 203 is a large-capacity storage device such as a hard disk drive (HDD) and a solid state drive (SSD), and stores data permanently. Note that the program and data stored in the main storage device 202 may be stored in the secondary storage device 203. In this case, the processor 201 reads the program and data from the secondary storage device 203 and loads the program and data into the main storage device 202.

The network interface 204 communicates with other devices via a network according to a predetermined protocol.

The server may be realized using a virtual machine. In addition, the server may be realized by using a container.

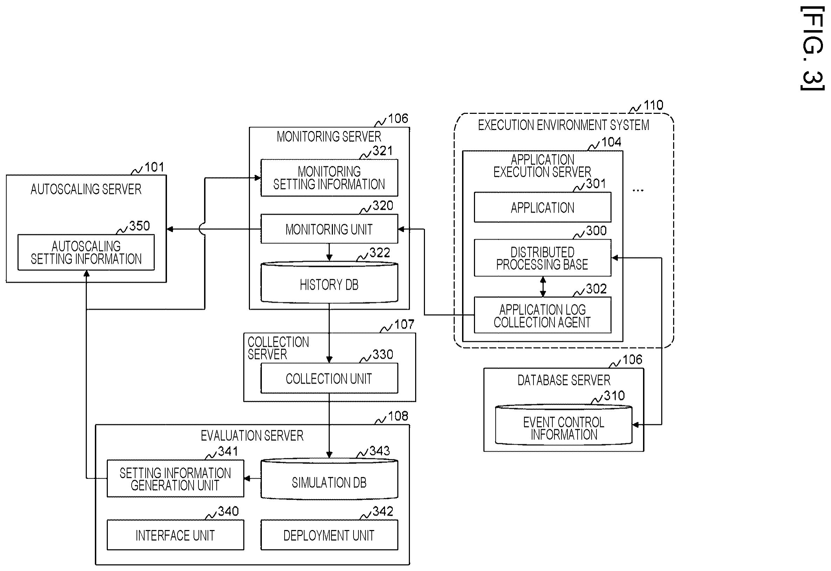

The application execution server 104 is a server that realizes an instance for executing an event-driven distributed application 301 (see FIG. 3). The application execution server 104 is configured on an execution environment system 110.

In the following description, an event-driven distributed application is simply referred to as an application.

The load balancer 102 distributes requests to the application 301.

The application 301 performs event processing according to an event processing flow that is a flow of event processing corresponding to the received request.

The application execution server 104 executes a plurality of event processing in parallel by allocating the event processing to a thread. Note that the application execution server 104 uses the database server 105 to record and refer to the number of unprocessed event processing accumulated and event processing progress states such as start of event processing, completion, retry, and error end.

In addition, the application execution server 104 can transfer the event processing to another application execution server 104 according to the load status of the server (the number of unprocessed event processing accumulated, or the like), and can request handover of the event processing.

In the present embodiment, it is assumed that an application 301 that realizes the same service exists for each combination of a region and a user. It is assumed that the application 301 is customized for each combination of a region and a user.

The database server 105 manages event control information 310 in which the number of unprocessed event processing accumulated in the application execution server 104, the event processing progress state, the event processing time, and the like are stored. Note that the database server 105 also manages data recorded and referred to by the application 301. The database server 105 may be divided into the former and the latter data management applications.

The autoscaling server 101 is a server that implements an autoscaling service for increasing or decreasing the number of application execution servers 104. For example, the autoscaling server 101 acquires determination metrics such as the CPU usage rate of the application execution server 104, adds the application execution server 104 in a case where the determination metrics are larger than a threshold, and reduces the application execution server 104 in a case where the determination metrics are smaller than the threshold. For example, a scaling function of an orchestration service including Amazon Elastic Kubernetes Service (EKS) is assumed.

The monitoring server 106 acquires various types of information from the application execution server 104, the database server 105, and the load balancer 102 in order to calculate the determination metrics. For example, the number of received requests, an event processing log, operation information of the application execution server 104, a log of data write processing and read processing for the database server 105, and the like are acquired. The event processing log includes a type of event processing, a processing time, a call for another event processing, and the like. In the following description, information regarding execution of the application 301 is also referred to as an application log.

The monitoring server 106 calculates determination metrics using the acquired application log, and transmits the determination metrics to the autoscaling server 101. Note that values included in the acquired information may be calculated as the determination metrics as they are, or the determination metrics may be calculated by information processing using the acquired information. In addition, the monitoring server 106 may convert the determination metrics into determination values and transmit the determination values.

The collection server 107 acquires the application log from the monitoring server 106 and transmits the application log to the evaluation server 108.

The evaluation server 108 executes a simulation of each of the application 301 and the autoscaling server 101. In the following description, each simulation of the application 301 and the autoscaling server 101 will be collectively referred to as an operation simulation. The evaluation server 108 determines a control value for controlling autoscaling based on the result of the operation simulation, and reflects the control value in various setting information of the autoscaling server 101 and the monitoring server 106.

FIG. 3 is a diagram illustrating an example of cooperation between servers in the IT system of the first embodiment.

In the execution environment system 110, it is assumed that a plurality of application execution servers 104 execute event processing.

The application execution server 104 includes an application 301, a distributed processing base 300, and an application log collection agent 302.

The application 301 operates on the distributed processing base 300. The distributed processing base 300 functions as a framework of the application 301. Specifically, for the event processing flow and each event processing, the distributed processing base 300 performs event progress management by accessing the event control information 310 of the database server 105, event calling, thread assignment to the event processing, and event transfer between the application execution servers 104.

The application log collection agent 302 periodically acquires, from the distributed processing base 300, logs (application logs) related to execution of the application 301, such as an event execution history, a CPU usage rate, a usage amount of a heap memory, the number of event processing accumulated, and an event processing time. Note that the application log collection agent 302 may acquire necessary information from the database server 105 or the autoscaling server 101.

First, a processing flow of autoscaling will be described.

A monitoring unit 320 of the monitoring server 106 acquires the application log from the application log collection agent 302. Note that the monitoring unit 320 may acquire information for calculating the determination metrics from a configuration other than the application log collection agent 302. For example, the current number of operating application execution servers 104 may be acquired from the autoscaling server 101.

The monitoring unit 320 of the monitoring server 106 calculates determination metrics using the acquired information based on monitoring setting information 321, and transmits the determination metrics to the autoscaling server 101. In the monitoring setting information 321, an algorithm or the like for calculating determination metrics is stored.

The monitoring unit 320 stores the acquired application log and the calculated determination metrics in a history DB 322.

The autoscaling server 101 determines the necessity of scaling based on autoscaling setting information 350 and the determination metrics, and adds or deletes the application execution server 104. Note that the autoscaling setting information 350 includes a threshold, the maximum number and the minimum number of the application execution servers 104, and the like.

Next, a processing flow for calculating the control value will be described.

The evaluation server 108 instructs a collection unit 330 of the collection server 107 to acquire the application log. The collection unit 330 acquires an application log from the history DB 322 of the monitoring server 106, and performs processing as necessary. The collection unit 330 transmits the application log to the evaluation server 108.

In the present embodiment, it is assumed that a deployment unit 342 of the evaluation server 108 deploys a program for realizing the collection unit 330 in the collection server 107. In addition, it is assumed that the deployment unit 342 of the evaluation server 108 transmits a collection instruction and a stop instruction to the collection unit 330.

The evaluation server 108 stores the application log received from the collection server 107 in a simulation DB 343.

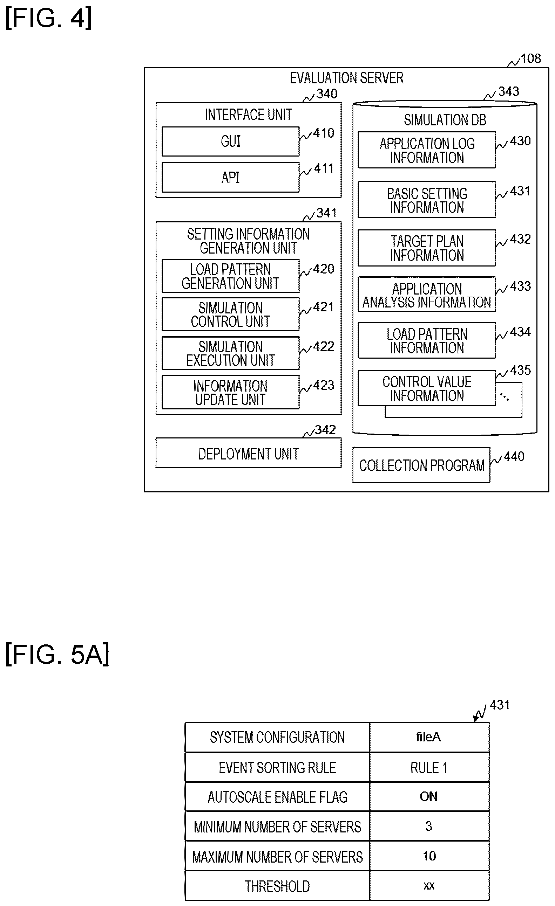

A setting information generation unit 341 generates a load pattern using the application log, and executes an operation simulation for determining a control value such as a threshold of a determination metric using the load pattern. The setting information generation unit 341 generates control value information 435 (see FIG. 4) based on the result of the operation simulation. In addition, the setting information generation unit 341 transmits information on the determined control value to the autoscaling server 101 and the monitoring server 106.

Note that the evaluation server 108 may directly acquire the application log from the monitoring server 106. In this case, the collection server 107 is not necessary.

FIG. 4 is a diagram illustrating an example of a functional configuration of the evaluation server 108 of the first embodiment.

The evaluation server 108 includes an interface unit 340, a setting information generation unit 341, and a deployment unit 342. In addition, the evaluation server 108 holds a simulation DB 343 and a collection program 440.

The interface unit 340 provides an API 411 for accessing a functional unit or DB of the evaluation server 108 and a GUI 410 for presenting various types of information.

The deployment unit 342 deploys the collection program 440 that implements the collection unit 330, and transmits a collection instruction and a stop instruction to the collection unit 330.

The setting information generation unit 341 includes a load pattern generation unit 420, a simulation control unit 421, a simulation execution unit 422, and an information update unit 423.

The load pattern generation unit 420 generates a load pattern based on the application log. The simulation control unit 421 controls simulation (discrete event simulation) of the application 301 and execution of simulation of the autoscaling server 101. The simulation execution unit 422 executes simulation of the application 301 and simulation of the autoscaling server 101. The information update unit 423 determines a control value based on the result of the operation simulation, and reflects the monitoring setting information 321 and the autoscaling setting information 350.

The simulation DB 343 stores application log information 430, basic setting information 431, target plan information 432, application analysis information 433, load pattern information 434, and control value information 435.

The application log information 430 stores the application log acquired from the collection server 107. The basic setting information 431 is information for managing the basic setting of the discrete event simulation of the application 301. The target plan information 432 stores a target plan in which an evaluation index or the like of the operation simulation is set. The application analysis information 433 stores an analysis result of the behavior of the application 301. The load pattern information 434 stores a load pattern. The control value information 435 stores a control value for controlling scaling.

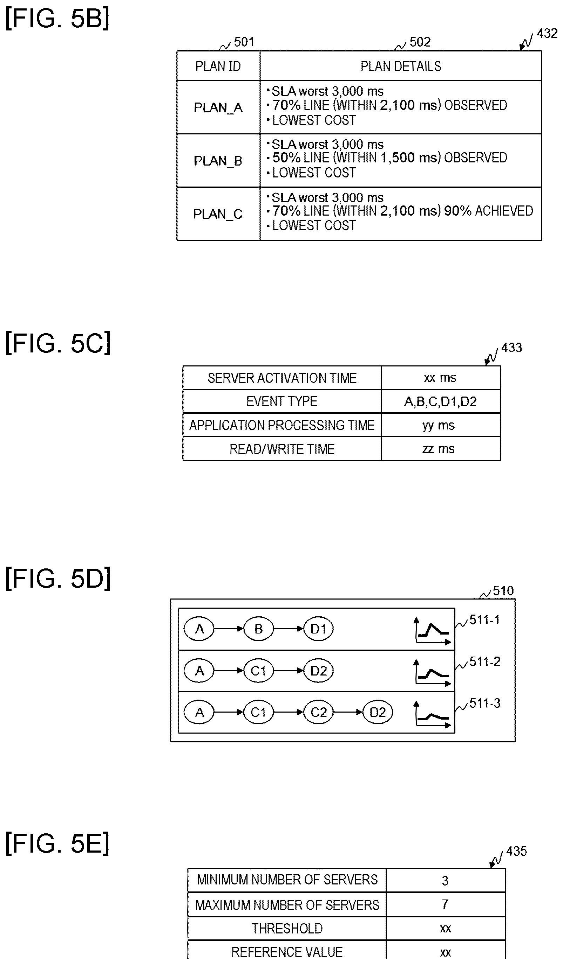

FIGS. 5A, 5B, 5C, 5D, and 5E are diagrams illustrating an example of a data structure of information stored in the simulation DB 343 of the first embodiment.

FIG. 5A illustrates a data structure of the basic setting information 431. The basic setting information 431 includes a configuration of the execution environment system 110, an event sorting rule, an enabling setting of the autoscaling service, a minimum number of servers, a maximum number of servers, and a threshold. The minimum number of servers and the maximum number of servers may be blank. The minimum number of servers and the maximum number of servers are determined by processing to be described later. The threshold included in the basic setting information 431 is an initial value of the threshold in the operation simulation.

FIG. 5B illustrates a data structure of the target plan information 432. The target plan information 432 stores an entry including a plan ID 501 and a plan details 502. One entry corresponds to one target plan (operation policy).

The plan ID 501 is a field for storing an ID of the target plan. The plan details 502 is a field for storing details of the target plan. The plan details 502 store values related to the SLA, items regarded as important in determination of the threshold, and the like. In the plan ID "PLAN_A", the upper limit value of the response time is 3,000 ms, and the threshold at which the response time is observed within 2,100 ms and the cost is the lowest is determined.

FIG. 5C illustrates a data structure of the application analysis information 433. The application analysis information 433 stores the activation time of the application execution server 104, the classification of the event in the application 301, the processing time of the application 301, the read/write time with respect to the database server 105, and the like obtained by analyzing the application log.

FIG. 5D illustrates a data structure of a load pattern 510 stored in the load pattern information 434. The load pattern 510 includes one or more pieces of data 511 including an event processing flow and a request flow rate transition graph. The event processing flow includes a node indicating a classification of an event and an edge indicating a transition between events. A transition probability can be set to the edge.

FIG. 5E illustrates a data structure of the control value information 435. One piece of control value information 435 is output for one target plan. The control value information 435 includes, for example, a minimum number of servers, a maximum number of servers, a threshold, and a reference value.

The reference value is a value for estimating the resource usage amount from the determination metrics. For example, when the reference value is 100 and the determination metric is 50, 50% (= 50/100) is calculated as the determination value.

When the threshold is greater than the determination value, it can be seen that the resource has a margin, and when the threshold is less than the determination value, it can be seen that the resource is tight. For example, when the determination value is 50% and the threshold is 100%, there is a possibility that the resource can be reduced by half, and when the determination value is 200% and the threshold is 100%, it can be said that the resource needs to be doubled.

In the case of determining the threshold and the reference value, the operation simulation may be executed while fixing one of the threshold and the reference value. In the present embodiment, the reference value is fixed, and the description is made on the assumption that the threshold is determined. Note that, in a case where the determination metrics are used as they are for scaling control, the reference value is unnecessary.

The reference value included in the control value information 435 is reflected in the monitoring setting information 321 of the monitoring server 106. The maximum number of servers, the minimum number of servers, and the threshold included in the control value information 435 are reflected in the autoscaling setting information 350 of the autoscaling server 101.

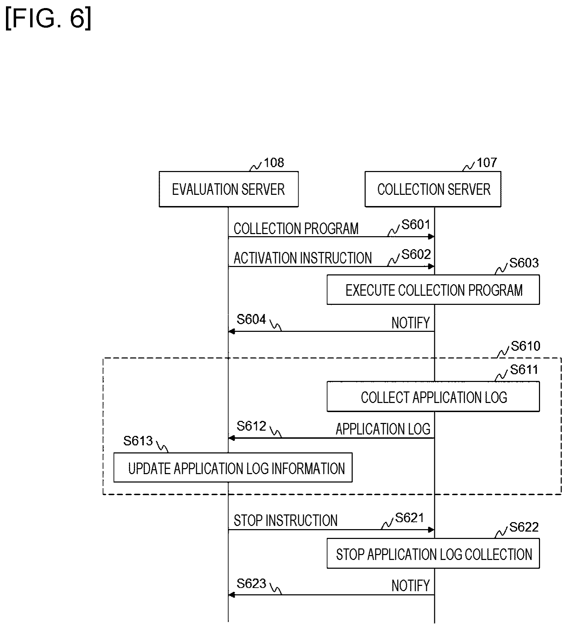

FIG. 6 is a sequence diagram illustrating a flow of deployment/control of the collection unit 330 in the IT system of the first embodiment.

When accepting a deploy request from the user via the interface unit 340, the deployment unit 342 of the evaluation server 108 outputs a response to the user via the interface unit 340, and then deploys the collection program 440 on the collection server 107 (step S601).

When accepting an activation request from the user via the interface unit 340, the deployment unit 342 transmits an activation instruction to the collection server 107 (step S602).

When receiving the activation instruction, the collection server 107 executes the collection program 440 to start the collection unit 330 (step S603). The collection server 107 notifies the evaluation server 108 of the completion of activation (step S604). The evaluation server 108 outputs a response to the activation request via the interface unit 340.

The collection server 107 periodically executes application log collection processing (step S610). Specifically, the collection server 107 acquires the application log from the monitoring server 106 (step S611), and transmits the application log to the evaluation server 108 (step S612). The evaluation server 108 updates the application log information 430 (step S613). Specifically, the received application log is registered in the application log information 430.

When accepting a stop request from the user via the interface unit 340, the deployment unit 342 transmits a stop instruction to the collection server 107 (step S621). The collection server 107 stops the application log collection processing (step S622). The collection server 107 notifies the evaluation server 108 of the stop of processing (step S623). The evaluation server 108 outputs a response to the stop request via the interface unit 340.

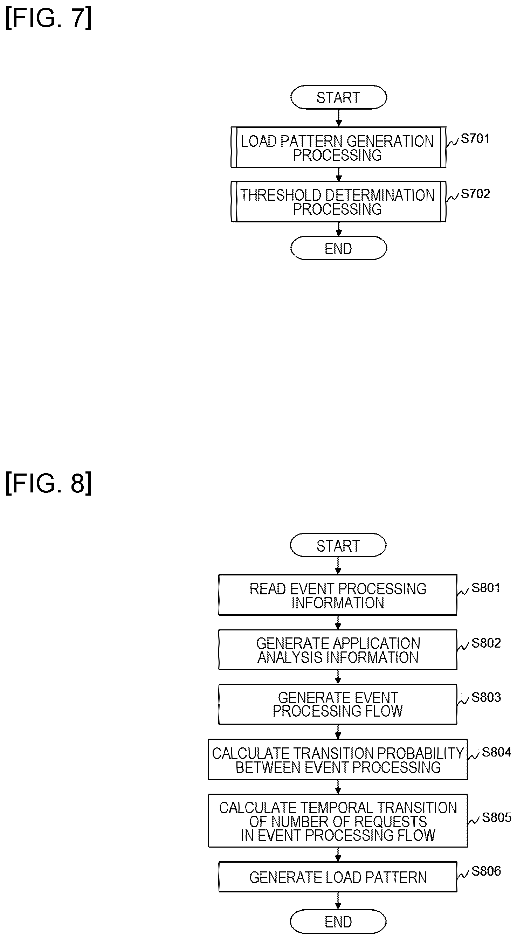

FIG. 7 is a flowchart for explaining an outline of processing executed by the evaluation server 108 of the first embodiment.

When accepting the load pattern generation request via the interface unit 340, the evaluation server 108 outputs a response via the interface unit 340 and then executes the load pattern generation processing (step S701). The generation request includes information for specifying the target application 301. For example, a region, a user ID, and the like are included.

When accepting the operation simulation execution request via the interface unit 340, the evaluation server 108 outputs a response via the interface unit 340 and then executes the threshold determination processing (step S702). The operation simulation execution request includes information for specifying the target application 301.

FIG. 8 is a flowchart for explaining an example of the load pattern generation processing executed by the evaluation server 108 of the first embodiment.

The load pattern generation unit 420 reads the application log of the designated application 301 from the application log information 430 (step S801).

The load pattern generation unit 420 generates the application analysis information 433 by analyzing the application log (step S802).

For example, the load pattern generation unit 420 analyzes application logs from the start of processing to the completion of processing of the application 301. By analyzing the application log, the activation time of the application execution server 104, the type of the event processing to be executed, the execution time of the event processing, and the read/write time with respect to the database server 105 accompanying the event processing are calculated.

The load pattern generation unit 420 generates an event processing flow based on the analysis result of the application log (step S803). For example, the following process is performed.

(S803-1)The load pattern generation unit 420 generates a pair of event processing for transition. Here, a pair is generated so that combinations of event processing do not overlap.

(S803-2)The load pattern generation unit 420 specifies a pair having the same event processing at the transition destination and sets different identification information for the transition destination event processing of the pair. For example, in a case where there is a pair of the event processing "D" called from the event processing "B" and a pair of the event processing "D" called from the event processing "C", the identifier of the event processing "D" of the former pair is set to "D1", and the identifier of the event processing "D" of the latter pair is set to "D2". Even in the same event processing, when the event processing of the call source is different, there is a difference in the processing time of the event processing of the call destination. Therefore, different identifiers are set.

(S803-3)The load pattern generation unit 420 generates an event processing flow by combining event processing based on the pair and the event processing information.

The load pattern generation unit 420 calculates a transition probability between event processing of each event processing flow based on the application log (step S804). The transition probability between the event processing is calculated as a conditional probability.

The load pattern generation unit 420 calculates the temporal transition of the number of requests of each event processing flow (step S805).

(S805-1)The load pattern generation unit 420 calculates a temporal transition of the number of requests processed by the application 301 based on the application log.

(S805-2)The load pattern generation unit 420 calculates the occurrence frequency of the event processing flow by using the transition probability between the event processing of the event processing flow. For example, a method of calculating an occurrence frequency from a multiplication value of a transition probability between event processing is conceivable. In a case where the multiplication value of the transition probability of the event processing flow (1) is 0.07 and the multiplication value of the transition probability of the event processing flow (2) is 0.03, it can be calculated that the occurrence frequency of the event processing flow (1) is 7/10 and the occurrence frequency of the event processing flow (2) is 3/10.

(S805-3)The load pattern generation unit 420 distributes the temporal transition of the number of requests processed by the application 301 based on the occurrence frequency.

The load pattern generation unit 420 generates a load pattern by associating the event processing flow with the temporal transition of the number of requests (step S806). The load pattern generation unit 420 registers the generated load pattern in the load pattern information 434 together with the information for specifying the application 301.

The load pattern may be manually set. For example, in a case where the target plan is examined by executing discrete event simulation with various load patterns before operating the application 301 in the actual environment, it is effective to grasp the behavior of scaling.

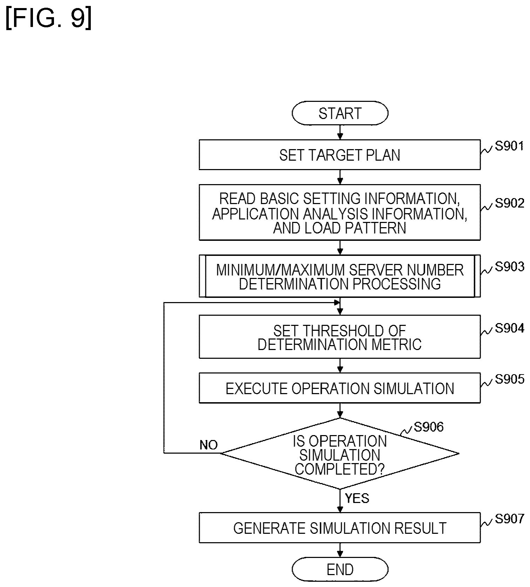

FIG. 9 is a flowchart for explaining an example of threshold determination processing executed by the evaluation server 108 of the first embodiment.

The simulation control unit 421 sets a target plan (step S901). The target plan is input by the user.

The simulation control unit 421 reads the basic setting information 431, the application analysis information 433, and the load pattern (step S902).

The simulation control unit 421 executes minimum/maximum server number determination processing (step S903). Details of the processing will be described later. In the processing, the minimum number of servers and the maximum number of servers are determined. Note that, in a case where the minimum number of servers and the maximum number of servers are given, the process of step S903 can be omitted. Note that the minimum/maximum server number determination processing may be executed only when the autoscaling service enable flag of the basic setting information 431 is "OFF".

The simulation control unit 421 sets a threshold of a determination metric (step S904) and instructs the simulation execution unit 422 to execute operation simulation (step S905). The instruction includes basic setting information 431, application analysis information 433, a load pattern, a threshold of determination metrics, and the like.

At the first time, the value stored in the basic setting information 431 is set as the threshold of the determination metric. In a case where a threshold is newly set after execution of the operation simulation, the threshold of the determination metric is set based on the result of the operation simulation. The threshold update algorithm can be arbitrarily set.

Note that simulation of the application 301 and simulation of scaling may be performed by using a known technique, and thus detailed description thereof is omitted.

After acquiring the result of the operation simulation from the simulation execution unit 422, the simulation control unit 421 determines whether to end the operation simulation (step S906). For example, in a case where the target plan is satisfied, the simulation control unit 421 determines to end the operation simulation. In addition, when the number of executions of the operation simulation is larger than the threshold, the simulation control unit 421 determines to end the operation simulation.

When not ending the operation simulation, the simulation control unit 421 returns to step S904. When ending the operation simulation, the simulation control unit 421 generates the control value information 435 based on the result of the operation simulation most appropriate for the operation plan (step S907). The simulation control unit 421 stores the control value information 435 in association with the load pattern and the result of the operation simulation.

Note that the simulation control unit 421 may determine a control value other than the threshold of the determination metric based on the result of the operation simulation. For example, the minimum number of servers may be determined based on the minimum value of the number of application execution servers 104 in the operation simulation.

Note that the evaluation server 108 may execute loop processing on the target plan and generate the control value information 435 of a plurality of target plans.

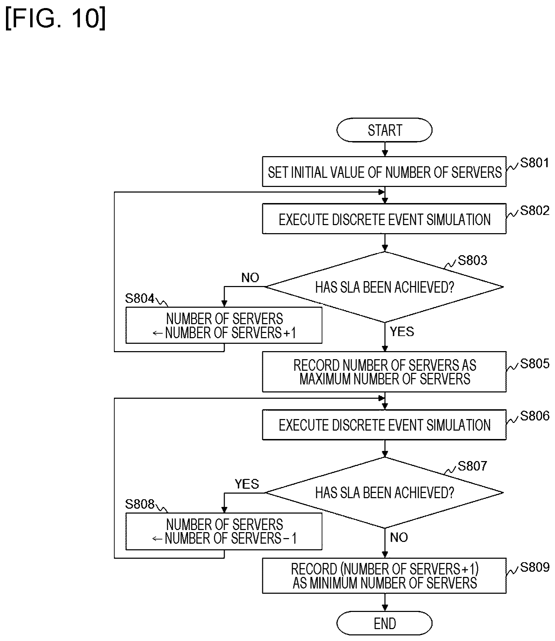

FIG. 10 is a flowchart for explaining an example of the minimum/maximum server number determination processing executed by the evaluation server 108 of the first embodiment.

The simulation control unit 421 sets an initial value of the number of application execution servers 104 (step S1001). For example, "1" is set as the initial value.

The simulation control unit 421 instructs the simulation execution unit 422 to execute discrete event simulation (step S1002). The instruction includes the basic setting information 431, the application analysis information 433, the load pattern, and the like.

The simulation control unit 421 acquires the execution result of the discrete event simulation from the simulation execution unit 422, and determines whether the SLA set in the operation plan is satisfied based on the execution result of the discrete event simulation (step S1003).

When the SLA set in the operation plan is not satisfied, the simulation control unit 421 adds 1 to the number of application execution servers 104 (step S1004), and then returns to step S1002.

When the SLA set in the operation plan is satisfied, the simulation control unit 421 sets the current number of application execution servers 104 to the maximum number of servers (step S1005).

The simulation control unit 421 instructs the simulation execution unit 422 to execute discrete event simulation (step S1006). The processing of step S1006 is the same as the processing of step S1002.

The simulation control unit 421 determines whether the SLA set in the operation plan is satisfied based on the execution result of the discrete event simulation (step S1007). The processing of step S1007 is the same as the processing of step S1003.

When the SLA set in the operation plan is satisfied, the simulation control unit 421 subtracts 1 from the number of application execution servers 104 (step S1008), and then returns to step S1006.

When the SLA set in the operation plan is not satisfied, the simulation control unit 421 sets a value obtained by adding 1 to the number of application execution servers 104 as the minimum number of servers (step S1009).

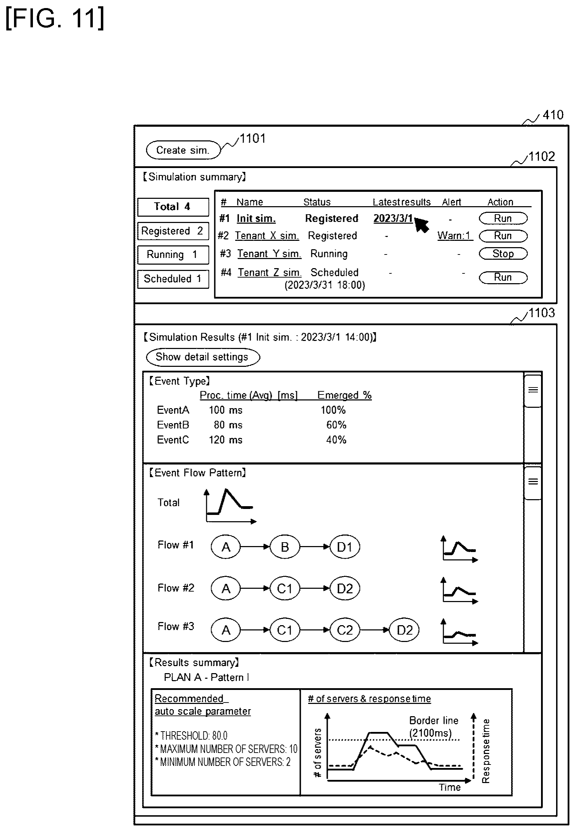

FIG. 11 is a diagram illustrating an example of the GUI 410 presented by the evaluation server 108 of the first embodiment.

A button 1101 is an operation button for performing various settings of the operation simulation. The user presses the button 1101 to set and edit the basic setting information 431, the operation plan, and the like, and to designate the application 301 to be simulated, and the like.

A display field 1102 is a field for displaying a summary of the operation simulation. The user can confirm the total number of registered operation simulations, the execution of operation simulations, the execution schedule of operation simulations, and the like by referring to the display field 1102. In addition, the user can confirm the result of the executed operation simulation and the alert information by operating the icon in the display field 1102. In addition, the user can instruct to execute and stop the operation simulation by operating the icon in the display field 1102.

A display field 1103 is a field for displaying the result of the operation simulation. The user can confirm the setting of the operation simulation, the load pattern, the result of the operation simulation, and the control value information 435 by referring to the display field 1103. In the drawing, the result of the operation simulation is displayed as a graph illustrating temporal transition of the number of application execution servers 104 and temporal transition of the response time of the application 301.

As described above, according to the present invention, in a system in which a plurality of applications 301 are operated, it is possible to set a threshold of a determination metric of autoscaling of the application 301.

The present invention is not limited to the embodiments described above, but includes various modifications. In addition, for example, the embodiments have been described with the configuration in detail in order to help with understanding on the invention, but the invention is not limited to the one equipped with all the configurations. In addition, some of the configurations of each embodiment may be added, deleted, or replaced with respect to the other configurations.

Each of the above configurations, functions, processing units, processing means, and the like may be partially or entirely achieved by hardware by, for example, designing by an integrated circuit. In addition, the invention may be realized by a software program code which realizes the functions of the embodiments. In this case, a recording medium recorded with the program code is provided to a computer, and a processor of the computer reads out the program code stored in the recording medium. In this case, the program code itself read out of the recording medium is used to realize the functions of the above embodiments. The program code itself and the recording medium storing the program code are configured in the invention. As a recording medium to supply such a program code, for example, there are a flexible disk, a CD-ROM, a DVD-ROM, a hard disk, a Solid State Drive (SSD), an optical disk, a magneto-optical disk, a CD-R, a magnetic tape, a nonvolatile memory card, and a ROM.

In addition, the program code to realize the functions of the present embodiment may be embedded by a wide program such as assembler, C/C++, perl, Shell, PHP, Python, Java or a script language.

Further, the software program code to realize the functions of the embodiment is distributed through a network, and stored in a recording unit such as a hard disk and a memory of the computer or a recording medium such as a CD-RW and a CD-R. The processor provided in the computer may read and perform the program code stored in the recording unit or the recording medium.

In the above embodiments, only control lines and information lines considered to be necessary for explanation are illustrated, but not all the control lines and the information lines for a product are illustrated. All the configurations may be connected to each other.

## Claims

1. A computer system comprising:
a processor;
a memory connected to the processor; and
a network interface connected to the processor, wherein
an execution environment system that provides an instance and an autoscaling system that controls scaling of the instance are connected,
in the execution environment system, a plurality of applications that provide a same service are executed by using the instance,
the application includes a plurality of event-driven event processing, and
the processor is configured to execute:
acquiring an execution log of processing of a target application;
generating, by using the execution log, a load pattern including one or more sets of a processing flow of the event processing in the target application and a temporal transition of a number of requests processed by the processing flow;
setting a threshold of a determination metric for controlling execution of the scaling based on the load pattern, and executing simulation processing of simulating processing of the target application and the scaling a plurality of times; and
determining a threshold of the determination metric based on a result of the simulation processing.

2. The computer system according to claim 1, wherein
the processor is further configured to execute:
generating a plurality of the processing flows based on the execution log;
calculating a temporal transition of a number of request processing performed by the target application based on the execution log;
calculating, for each of the plurality of processing flows based on the execution log, a transition probability between the event processing in the processing flow;
calculating, for each of the plurality of processing flows, an occurrence frequency based on a transition probability between the event processing in the processing flow; and
distributing a number of request processing at each time in a time transition of a number of request processing performed by the target application based on an occurrence frequency of each of the plurality of processing flows, thereby calculating a time transition of a number of requests processed by each of the plurality of processing flows.

3. The computer system according to claim 2, wherein the processor determines a threshold of the determination metric in such a way to satisfy an operation plan in which a service level and an operation policy are defined.

4. The computer system according to claim 2, wherein the processor determines a maximum number and a minimum number of the instances by setting a number of the instances based on the load pattern and a threshold of the determination metric and executing simulation processing of simulating processing of the target application a plurality of times.

5. The computer system according to claim 2, wherein the processor generates display information to display the load pattern, a result of the simulation, and a threshold of the determination metric.

6. A parameter determination method for controlling autoscaling executed by a computer system, wherein
the computer system includes a processor, a memory connected to the processor, and a network interface connected to the processor,
an execution environment system that provides an instance and an autoscaling system that controls scaling of the instance are connected,
in the execution environment system, a plurality of applications that provide a same service are executed by using the instance,
the application includes a plurality of event-driven event processing,
the parameter determination method comprises:
a first step of acquiring, by the processor, an execution log of processing of a target application and storing the execution log in the memory;
a second step of generating, by the processor using the execution log, a load pattern including one or more sets of a processing flow of the event processing in the target application and a temporal transition of a number of requests processed by the processing flow and storing the load pattern in the memory;
a third step of setting, by the processor, a threshold of a determination metric for controlling execution of the scaling based on the load pattern, and executing simulation processing of simulating processing of the target application and the scaling a plurality of times; and
a fourth step of determining, by the processor, a threshold of the determination metric based on a result of the simulation processing and storing the threshold in the memory.

7. The parameter determination method according to claim 6, wherein
the second step includes:
a step of generating, by the processor, a plurality of the processing flows based on the execution log;
a step of calculating, by the processor, a temporal transition of a number of request processing performed by the target application based on the execution log;
a step of calculating, by the processor, for each of the plurality of processing flows based on the execution log, a transition probability between the event processing in the processing flow;
a step of calculating, by the processor, for each of the plurality of processing flows, an occurrence frequency based on a transition probability between the event processing in the processing flow; and
a step of distributing, by the processor, a number of request processing at each time in a time transition of a number of request processing performed by the target application based on an occurrence frequency of each of the plurality of processing flows, thereby calculating a time transition of a number of requests processed by each of the plurality of processing flows.

8. The parameter determination method according to claim 7, wherein the fourth step includes a step of determining, by the processor, a threshold of the determination metric in such a way to satisfy an operation plan in which a service level and an operation policy are defined.

9. The parameter determination method according to claim 7, comprising a step of determining, by the processor, a maximum number and a minimum number of the instances by setting a number of the instances based on the load pattern and a threshold of the determination metric and by executing simulation processing of simulating processing of the target application a plurality of times.

10. The parameter determination method according to claim 7, comprising a step of generating, by the processor, display information to display the load pattern, a result of the simulation, and a threshold of the determination metric.

11. A computer system comprising:
an execution environment system that provides an instance;
an autoscaling system that controls scaling of the instance; and
an evaluation system that determines a threshold of a determination metric to control the scaling, wherein
in the execution environment system, a plurality of applications that provide a same service are executed by using the instance,
the application includes a plurality of event-driven event processing, and
the evaluation system is configured to execute:
acquiring an execution log of processing of a target application from the execution environment system;
generating, by using the execution log, a load pattern including one or more sets of a processing flow of the event processing in the target application and a temporal transition of a number of requests processed by the processing flow;
setting a threshold of a determination metric based on the load pattern, and executing simulation processing of simulating processing of the target application and the scaling a plurality of times; and
determining a threshold of the determination metric based on a result of the simulation processing, and transmitting the threshold to the autoscaling system.
